(19)

**Europäisches Patentamt**
**European Patent Office**
**Office européen des brevets**

(11)　**EP 3 349 361 B1**

(12)　**EUROPEAN PATENT SPECIFICATION**

(45) Date of publication and mention
of the grant of the patent:
**07.06.2023　Bulletin 2023/23**

(21) Application number: **18151433.2**

(22) Date of filing: **12.01.2018**

(51) International Patent Classification (IPC):
**H04B 1/10** *(2006.01)*

(52) Cooperative Patent Classification (CPC):
**H04B 1/10**

(54) **A METHOD FOR THE EXPLOITATION OF IMAGE INTERFERENCE IN MULTI-CARRIER WIRELESS SYSTEMS**

VERFAHREN ZUR AUSNUTZUNG VON BILDSTÖRUNGEN IN DRAHTLOSEN MEHRTRÄGERSYSTEMEN

PROCÉDÉ D'EXPLOITATION D'INTERFÉRENCE D'IMAGE DANS DES SYSTÈMES SANS FIL À PORTEUSES MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.01.2017　GR 20170100026**

(43) Date of publication of application:
**18.07.2018　Bulletin 2018/29**

(73) Proprietor: **Aristotle University of Thessaloniki - Elke**
**54636 Thessaloniki (GR)**

(72) Inventors:
• **KARAGIANNIDIS, Georgios**
**55337 Triandria**
**Thessaloniki (GR)**
• **SCHOBER, Robert**
**91058 Erlangen / DE (DE)**
• **BOULOGEORGOS, Alexandros Apostolos**
**57001 Triadi**
**Thermi (GR)**
• **KAPINAS, Vasileios**
**54 622 Thessaloniki (GR)**

(74) Representative: **Petsis, Christos**
**4-6, Kyparissias**
**542 49 Thessaloniki (GR)**

(56) References cited:
EP-A1- 1 838 007　　US-A1- 2005 195 733
US-A1- 2007 041 458　　US-A1- 2007 076 804

• **JIN Y ET AL: "Additional Diversity Gain in OFDM Receivers under the Influence of IQ Imbalances", PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, 1 June 2007 (2007-06-01), pages 5915-5920, XP031126613, ISBN: 978-1-4244-0353-0**
• **VIJAY KUMAR GARG: WIRELESS COMMUNICATIONS AND NETWORKING, MORGAN KAUFMANN, 1 January 2007 (2007-01-01), XP040425747, ISBN: 978-0-12-373580-5**

## Description

### Field of the invention

The present innovation is related to a method which exploits the inevitable image interference, i.e. a low complexity method for exploiting the image interference in multi-carrier wireless systems, due to the transmitter's and receiver's radio frequency (RF) front-end imperfections, in multi-carrier wireless systems, such as systems that use orthogonal frequency division modulation (OFDM) schemes.

### Prior art

Multi-carrier techniques can significantly improve the spectrum efficiency of wireless communication systems. Therefore, they are included in several communication standards.

The main advantage of multi-carrier over single-carrier systems are their ability to cope with severe channel conditions, such as narrowband interference and frequency-selective fading due to multipath, without using complex channel equalization filters. This is because multi-carrier signals may be viewed as the composition of several narrowband signals.

Typically, multi-carrier wireless transceivers follow super-heterodyne architecture. This architecture requires several analog components in order to achieve the acceptable communication signal quality. However, super-heterodyne architecture considerably increases the overall power consumption and cost. As a result, zero intermediate frequency (IF) architecture, in which the bandpass signal is converted directly to baseband, has gained increased popularity. However, zero-IF transceivers suffer from radio frequency (RF) imperfections that cause image frequency band interference. Image interference can significantly degrade the multi-carrier system's performance.

To overcome this drawback, various image interference compensation methods have been proposed. In particular, US 7822399 B2 of Telefonaktiebolaget LM Ericsson discloses a method for the estimation of the signal received on the image subcarrier and the compensation of the impact of image interference, by subtracting the estimated image signal from the desired signal.

WO 2014/050382 discloses a compensation process of removing an image component in a quadrature-demodulated signal. This method includes a quadrature demodulation compensation component that compensates for the quadrature-demodulated signal including an in-phase (I) signal and a quadrature (Q) signal. In other words, it is configured to compensate for a difference between frequency characteristic of a first filter that performs filtering of the I signal and frequency characteristic of a second filter that performs filtering of the Q signal.

Further relevant prior art is disclosed in non patent document XP031126613.

### Object of the invention

The present invention aims to deal with the problem of performance degradation due to the RF front-end imperfection, as well as to provide diversity gain, which significantly improves the quality-of-service (QoS) for a fixed transmit power.

### Summary of the invention

The present invention proposes a low-complexity method for exploiting the image interference in single-antenna multi-carrier systems. The proposed method compensates the negative effect of image interference, while, at the same time, it achieves diversity order of two. It comprises the steps of encoding the modulated symbols at the transmitter, and combining the signals received at image subcarriers at the receiver.

This method requires neither feedback from the receiver nor extra transmit power.

Nevertheless, it allows low-cost transceivers, in which the effect of image interference is more severe, to use high-order constellations.

According to the preferred embodiment of the invention, said steps are carried out in that order.

### Brief description of the figures

Figure 1 shows a schematical view of the transmitter according to the invention.
Figure 2 shows a schematical view of the transmitter's encoder according to the invention.
Figure 3 shows a schematical view of the receiver according to the invention.

Figure 4 shows a schematical view of the receiver's combiner according to the invention.

Figure 5 shows a graph showing the symbol error rate (SER) performance of the proposed method in comparison with the prior art and the ideal RF scenario.

## Description

The invention is defined in the appended claims. Exemplary embodiments which do not fall within the scope of the claims are not part of the invention but are described for illustrative purpose only, since they are useful for understanding the invention.

The present invention provides a method for exploiting the image interference in single-antenna multi-carrier wireless systems. In the presence of image interference, there is an error floor, when the conventional receiver is used. The method of the present invention is capable of removing that floor and obtaining better performance even from the ideal case, in which the impact of image interference is not taken into consideration.

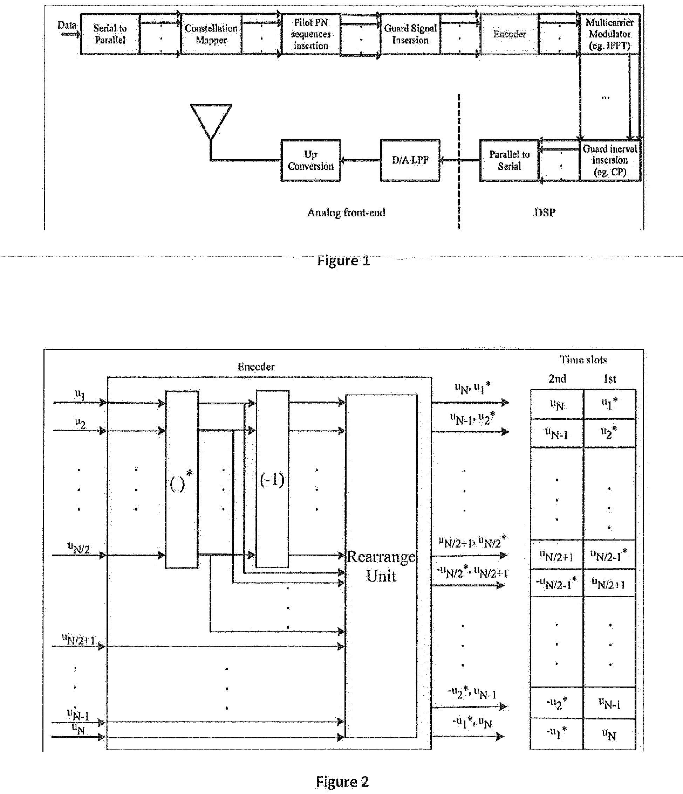

Figure 1 illustrates an exemplary embodiment of the transmitter of the present invention that can be used in OFDM systems. Specifically, the intended transmitted data (bits) are first mapped into complex symbols using a constellation mapper, e.g., by employing a quadrature amplitude modulation (QAM) scheme. Then, the symbols are encoded and transformed to the time domain via the inverse fast Fourier transform (IFFT) unit. Guard interval is inserted in order to enable the elimination of the inter-symbol interference at the receiver. Finally, the signal is converted from digital to analog, before being up-converted and transmitted. It is to be noted that the imperfections of the up-conversion unit cause image interference.

The transmission is organized in two consecutive time slots. The encoder shown in Figure 2 takes as input the symbols that are intended to be uploaded over the N subcarriers in a particular time slot, and returns a rearranged transformation of those symbols. In particular, if the input of the encoder is the following:

$$\mathbf{u} = \begin{bmatrix} u_1 \\ u_2 \\ \vdots \\ u_{\frac{N}{2}} \\ u_{\frac{N}{2}+1} \\ \vdots \\ u_{N-1} \\ u_N \end{bmatrix}$$

then the output of the encoder will be

$$\mathbf{v} = \begin{bmatrix} u_N & u_1^* \\ u_{N-1} & u_2^* \\ \vdots & \vdots \\ u_{\frac{N}{2}+1} & u_{\frac{N}{2}}^* \\ -u_{\frac{N}{2}}^* & u_{\frac{N}{2}+1} \\ \vdots & \vdots \\ -u_2^* & u_{N-1} \\ -u_1^* & u_N \end{bmatrix}$$

where $(\cdot)^*$ is the complex conjugate operator. It is to be noted that the elements in the first and second column of the row n of the matric v represent the symbols that will be uploaded to the subcarrier n at the second and the first consecutive time slots, respectively.

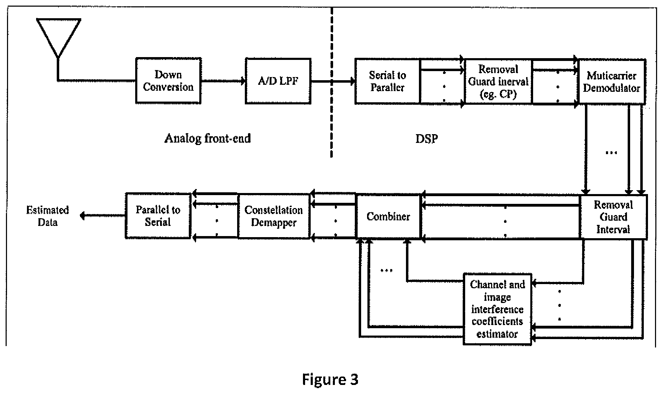

Figure 3 demonstrates an exemplary embodiment of the receiver of the present invention that can be used in OFDM systems. The received signal is first down-converted. Note that the down conversion unit causes image interference due to the hardware imperfections. Next, the guard interval is removed and the signal is forwarded to the multi-carrier demodulator, which in the case of OFDM is a fast Fourier transform (FFT) unit, and the guard intervals are removed. The baseband equivalent received signals in the first and second time slot on subcarrier n, with n<N/2 +1, are as follows:

$$\begin{aligned}
r_1(n) &= \kappa_r(n)h(n)\left(\kappa_t(n)v_{n,2} + \lambda_t(n)v_{N+1-n,2}^*\right) + \kappa_r(n)z_1(n) \\
&\quad + \lambda_r(n)h^*(N+1-n)\left(\kappa_t(N+1-n)v_{N+1-n,2} + \lambda_t(N+1-n)v_{n,2}^*\right)^* + \lambda_r(n)z_1^*(N+1-n) \\
&= \left(\kappa_r(n)\kappa_t(n)h(n) + \lambda_r(n)\lambda_t^*(N+1-n)h^*(N+1-n)\right)v_{n,2} \\
&\quad + \left(\kappa_r(n)\lambda_t(n)h(n) + \lambda_r(n)\kappa_t^*(N+1-n)h^*(N+1-n)\right)v_{N+1-n,2}^* \\
&\quad + \kappa_r(n)z_1(n) + \lambda_r(n)z_1^*(N+1-n)
\end{aligned}$$

and

$$\begin{aligned}
r_2(n) &= \kappa_r(n)h(n)\left(\kappa_t(n)v_{n,1} + \lambda_t(n)v_{N+1-n,1}^*\right) + \kappa_r(n)z_2(n) \\
&\quad + \lambda_r(n)h^*(N+1-n)\left(\kappa_t(N+1-n)v_{N+1-n,1} + \lambda_t(N+1-n)v_{n,1}^*\right)^* + \lambda_r(n)z_2^*(N+1-n) \\
&= \left(\kappa_r(n)\kappa_t(n)h(n) + \lambda_r(n)\lambda_t^*(N+1-n)h^*(N+1-n)\right)v_{n,1} \\
&\quad + \left(\kappa_r(n)\lambda_t(n)h(n) + \lambda_r(n)\kappa_t^*(N+1-n)h^*(N+1-n)\right)v_{N+1-n,1}^* \\
&\quad + \kappa_r(n)z_2(n) + \lambda_r(n)z_2^*(N+1-n)
\end{aligned}$$

respectively, while the baseband equivalent received signals in the first and second time slot on the (N+1-n) image subcarrier are as follows:

$$\begin{aligned}
r_1(N+1-n) &= \kappa_r(N+1-n)h(N+1-n)\left(\kappa_t(N+1-n)v_{N+1-n,2} + \lambda_t(N+1-n)v_{n,2}^*\right) + \kappa_r(N+1-n)z_1 \\
&\quad + \lambda_r(N+1-n)h^*(n)\left(\kappa_t(n)v_{n,2} + \lambda_t(n)v_{N+1-n,2}^*\right)^* + \lambda_r(N+1-n)z_1^*(n) \\
&= \left(\kappa_r(N+1-n)\kappa_t(N+1-n)h(N+1-n) + \lambda_r(N+1-n)\lambda_t^*(n)h^*(n)\right)v_{N+1-n,2} \\
&\quad + \left(\kappa_r(N+1-n)\lambda_t(N+1-n)h(N+1-n) + \lambda_r(N+1-n)\kappa_t^*(n)h^*(n)\right)v_{n,2}^* \\
&\quad + \kappa_r(N+1-n)z_1(N+1-n) + \lambda_r(N+1-n)z_1^*(n)
\end{aligned}$$

and

$$\begin{aligned}
r_2(N+1-n) &= \kappa_r(N+1-n)h(N+1-n)\left(\kappa_t(N+1-n)v_{N+1-n,1} + \lambda_t(N+1-n)v_{n,1}^*\right) + \kappa_r(N+1-n)z_2 \\
&\quad + \lambda_r(N+1-n)h^*(n)\left(\kappa_t(n)v_{n,1} + \lambda_t(n)v_{N+1-n,1}^*\right)^* + \lambda_r(N+1-n)z_2^*(n) \\
&= \left(\kappa_r(N+1-n)\kappa_t(N+1-n)h(N+1-n) + \lambda_r(N+1-n)\lambda_t^*(n)h^*(n)\right)v_{N+1-n,1} \\
&\quad + \left(\kappa_r(N+1-n)\lambda_t(N+1-n)h(N+1-n) + \lambda_r(N+1-n)\kappa_t^*(n)h^*(n)\right)v_{n,1}^* \\
&\quad + \kappa_r(N+1-n)z_2(N+1-n) + \lambda_r(N+1-n)z_2^*(n)
\end{aligned}$$

where $K_t(n)$, $\lambda_t(n)$ and $K_r(n)$, $\lambda_r(n)$ are complex coefficients that model the impact of image interference at the transmitter and receiver, respectively, on subcarrier n. Moreover, h(n) represent the baseband equivalent fading gain in subcarrier n, whereas $z_i(n)$ (i=1,2) stands for the circularly symmetric white Gaussian noise (AWGN) that is added to the received signal on subcarrier n in the i-th time slot. It is to be noted that the channels for the image subcarriers remain constant over the two consecutive time slots. Practical systems are usually designed such that this assumption holds in order to facilitate channel estimation and tracking.

If a pilot sequence has been transmitted, the received baseband signal is forwarded to the channel and image interference coefficients estimator, which estimates the distorted (due to image interference) channels' coefficients, $c_{1,n}$, $c_{2,n}$, $c_{1,N+1-n}$, $c_{2,N+1-n}$, as

$$\begin{bmatrix} v_{n,2} & v_{N+1-n,2}^* \\ v_{n,1} & v_{N+1-n,1}^* \end{bmatrix}^{-1} \begin{bmatrix} r_1(n) \\ r_2(n) \end{bmatrix} = \begin{bmatrix} c_{1,n} \\ c_{2,n} \end{bmatrix} + \begin{bmatrix} \epsilon_{1,n} \\ \epsilon_{2,n} \end{bmatrix}$$

and

$$\begin{bmatrix} v_{N+1-n,2} & v_{n,2}^* \\ v_{N+1-n,1} & v_{n,1}^* \end{bmatrix}^{-1} \begin{bmatrix} r_1(N+1-n) \\ r_2(N+1-n) \end{bmatrix} = \begin{bmatrix} c_{3,n} \\ c_{4,n} \end{bmatrix} + \begin{bmatrix} \epsilon_{3,n} \\ \epsilon_{4,n} \end{bmatrix}$$

In the above expressions, the parameters $\epsilon_i$ (i=1,2,3,4) represent estimation errors, due to the additive noise. Next, the parameters $c_{1,n}$, $c_{2,n}$, $C_{1,N+1-n}$, $C_{2,N+1-n}$ are forwarded to the combiner. Note that a similar estimation method has been presented in "Y. Jin, J. Kwon, Y. Lee, J. Ahn, W. Choi, and D. Lee, "Additional diversity gain in OFDM receivers under the influence of IQ imbalances," in Proc. IEEE Int. Conf. Common. (ICC), Jun. 2007, pp. 5915-5920."

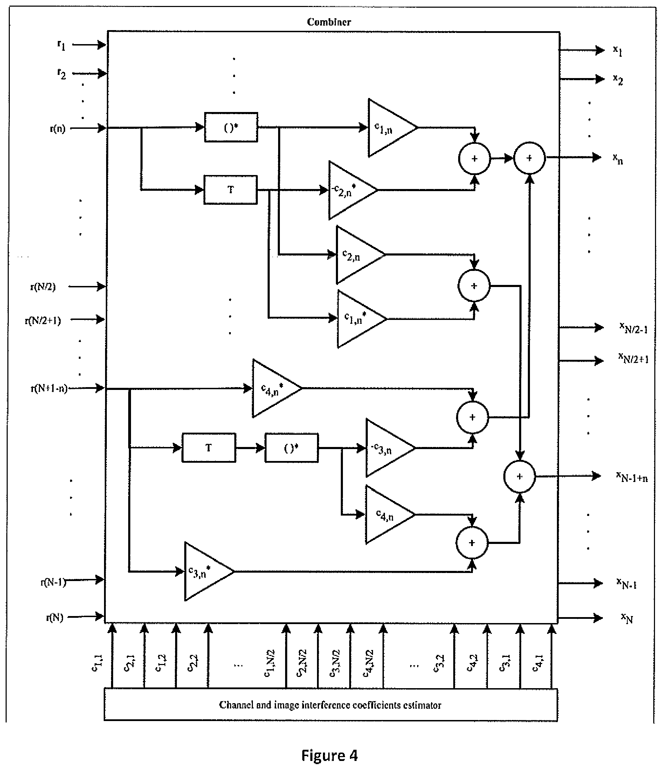

If an information message has been transmitted, the two consecutive received baseband signals are forwarded to the combiner, which uses and combines the received signals in the first and the second time slot on the subcarriers n and N+1-n, as illustrated in Figure 4. Note that in Figure 4, T stands for the symbol duration. The combiner's output is forwarded to the constellation demapper, which estimates the transmitted symbols using a typical detector (e.g., maximum likelihood detector - MLD).

According to the method described, the present invention results in minimizing the impact of image interference, which is the main disadvantage of the low-cost transceivers. Furthermore, it achieves diversity gain of second order, which improves the communication quality for a given transmit power.

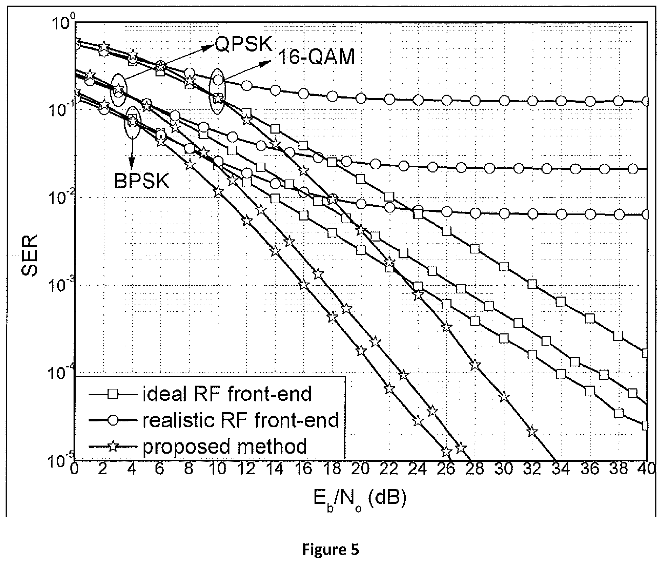

The SER performance of the present invention for binary phase shift keying (BPSK), quadrature phase shift keying (QPSK) and 16-QAM constellations, in comparison with the case of realistic transceivers with uncompensated image interference, and the ideal RF front-end transceivers scenario, in which the image interference effect has been neglected, are presented in Figure 5. In the case of "realistic RF front-end", and "proposed method", the amount of attenuation of the image band for both the transmitter and receiver are set to 20dB. This is considered the worst case scenario. It can be observed that, for fixed constellation, the performance of the present invention is improved in comparison to both the "realistic RF front-end" scenario and the "ideal RF front-end". Moreover, at a SER of $10^{-3}$, which is a practical requirement in several wireless communication standards, the gain achieved by the proposed method with QPSK is about 7 dB compared to the ideal RF front-end with BPSK, whereas in case of the "realistic RF front-end", an error floor is observed at a SER of $6 \times 10^{-3}$.

**Claims**

1. A low complexity method for converting image interference caused in multi-carrier wireless systems into diversity gain, said multi-carrier wireless system comprising :

   - a multi-carrier single-antenna transmitter;
   - a multi-carrier single-antenna receiver;
   - wherein the transmitter comprises an encoder; and
   - wherein the receiver comprises a combiner configured to process the symbols received in image subcarriers in two consecutive time slots wherein said transmitter and receiver cause said image interference,

   the method being **characterized in that** it comprises the steps of

   - encoding the modulated symbols at the transmitter, and
   - combining signals received at image subcarriers at the receiver, wherein said steps are carried out **in that** order,

   further wherein

   i) transmission information encoding is performed during both channel estimation and data transmission phases;
   ii) the combiner which is incorporated at the receiver is used during the data transmission phase;
   iii) a conventional maximum likelihood detector MLD is used for symbol estimation, whereas the combiners output is an in-phase and quadrature imbalance IQI-free signal, thereby providing gain diversity order of 2.

2. Method according to the preceding claim 1, wherein an error floor which is generated in the presence of said image interference occurring when the conventional receiver is used, is removed.

3. Method according to one of the preceding claims 1 or 2, wherein with said transmitter that can be used in OFDM systems, intended transmitted data bits are first mapped into complex symbols using a constellation mapper, wherein the symbols are then encoded and transformed to the time domain via an inverse fast Fourier transform IFFT unit, further wherein a guard interval is inserted in order to enable the elimination of the intersymbol interference at the receiver, finally wherein the signal is converted from digital to analog, before being up-converted and transmitted, whereas the imperfections of the up-conversion unit cause image interference.

4. Method according to claim 3, wherein with said transmitter that is used in OFDM systems, the intended transmitted data bits are first mapped into complex symbols using a constellation mapper by employing a quadrature amplitude modulation QAM scheme, wherein the symbols are then encoded and transformed to the time domain via an inverse fast Fourier transform IFFT unit.

5. Method according to one of the preceding claims, wherein the transmission is organized in two consecutive time slots, wherein the encoder is configured to take as input the symbols that are intended to be uploaded over the N subcarriers in a particular time slot, and returns a rearranged transformation of those symbols.

6. Method according to claim 5, wherein the input of the encoder is the following:

$$\mathbf{u} = \begin{bmatrix} u_1 \\ u_2 \\ \vdots \\ u_{\frac{N}{2}} \\ u_{\frac{N}{2}+1} \\ \vdots \\ u_{N-1} \\ u_N \end{bmatrix}$$

yielding the output of the encoder as

$$\mathbf{v} = \begin{bmatrix} u_N & u_1^* \\ u_{N-1} & u_2^* \\ \vdots & \vdots \\ u_{\frac{N}{2}+1} & u_{\frac{N}{2}}^* \\ -u_{\frac{N}{2}}^* & u_{\frac{N}{2}+1} \\ \vdots & \vdots \\ -u_2^* & u_{N-1} \\ -u_1^* & u_N \end{bmatrix}$$

where $(\cdot)^*$ is the complex conjugate operator, wherein the elements in the first and second column of the row n of the matrix v represent the symbols that will be uploaded to the subcarrier n at the second and the first consecutive time slots, respectively.

7. Method according to one of the preceding claims, wherein the receiver is used in OFDM systems, wherein the received signal is first down-converted, whereas the down conversion unit causes image interference due to hardware imperfections wherein next, the guard interval is removed, and the signal is forwarded to the multi-carrier demodulator, which in the case of OFDM is a fast Fourier transform FFT unit, and the guard intervals are removed,

wherein the baseband equivalent received signals in the first and second time slot on subcarrier n, with $n < N/2 + 1$, are as follows:

$$r_1(n) = \kappa_r(n)h(n)\left(\kappa_t(n)v_{n,2} + \lambda_t(n)v_{N+1-n,2}^*\right) + \kappa_r(n)z_1(n)$$
$$+ \lambda_r(n)h^*(N+1-n)\left(\kappa_t(N+1-n)v_{N+1-n,2} + \lambda_t(N+1-n)v_{n,2}^*\right)^* + \lambda_r(n)z_1^*(N+1-n)$$
$$= \left(\kappa_r(n)\kappa_t(n)h(n) + \lambda_r(n)\lambda_t^*(N+1-n)h^*(N+1-n)\right)v_{n,2}$$
$$+ \left(\kappa_r(n)\lambda_t(n)h(n) + \lambda_r(n)\kappa_t^*(N+1-n)h^*(N+1-n)\right)v_{N+1-n,2}^*$$
$$+ \kappa_r(n)z_1(n) + \lambda_r(n)z_1^*(N+1-n)$$

and

$$r_2(n) = \kappa_r(n)h(n)\left(\kappa_t(n)v_{n,1} + \lambda_t(n)v_{N+1-n,1}^*\right) + \kappa_r(n)z_2(n)$$
$$+ \lambda_r(n)h^*(N+1-n)\left(\kappa_t(N+1-n)v_{N+1-n,1} + \lambda_t(N+1-n)v_{n,1}^*\right)^* + \lambda_r(n)z_2^*(N+1-n)$$
$$= \left(\kappa_r(n)\kappa_t(n)h(n) + \lambda_r(n)\lambda_t^*(N+1-n)h^*(N+1-n)\right)v_{n,1}$$
$$+ \left(\kappa_r(n)\lambda_t(n)h(n) + \lambda_r(n)\kappa_t^*(N+1-n)h^*(N+1-n)\right)v_{N+1-n,1}^*$$
$$+ \kappa_r(n)z_2(n) + \lambda_r(n)z_2^*(N+1-n)$$

respectively, while the baseband equivalent received signals in the first and second time slot on the (N+1-n) image subcarrier are as follows:

$$r_1(N+1-n) = \kappa_r(N+1-n)h(N+1-n)\left(\kappa_t(N+1-n)v_{N+1-n,2} + \lambda_t(N+1-n)v_{n,2}^*\right) + \kappa_r(N+1-n)z_1$$
$$+ \lambda_r(N+1-n)h^*(n)\left(\kappa_t(n)v_{n,2} + \lambda_t(n)v_{N+1-n,2}^*\right)^* + \lambda_r(N+1-n)z_1^*(n)$$
$$= \left(\kappa_r(N+1-n)\kappa_t(N+1-n)h(N+1-n) + \lambda_r(N+1-n)\lambda_t^*(n)h^*(n)\right)v_{N+1-n,2}$$
$$+ \left(\kappa_r(N+1-n)\lambda_t(N+1-n)h(N+1-n) + \lambda_r(N+1-n)\kappa_t^*(n)h^*(n)\right)v_{n,2}^*$$
$$+ \kappa_r(N+1-n)z_1(N+1-n) + \lambda_r(N+1-n)z_1^*(n)$$

and

$$r_2(N+1-n) = \kappa_r(N+1-n)h(N+1-n)\left(\kappa_t(N+1-n)v_{N+1-n,1} + \lambda_t(N+1-n)v_{n,1}^*\right) + \kappa_r(N+1-n)z_2$$
$$+ \lambda_r(N+1-n)h^*(n)\left(\kappa_t(n)v_{n,1} + \lambda_t(n)v_{N+1-n,1}^*\right)^* + \lambda_r(N+1-n)z_2^*(n)$$
$$= \left(\kappa_r(N+1-n)\kappa_t(N+1-n)h(N+1-n) + \lambda_r(N+1-n)\lambda_t^*(n)h^*(n)\right)v_{N+1-n,1}$$
$$+ \left(\kappa_r(N+1-n)\lambda_t(N+1-n)h(N+1-n) + \lambda_r(N+1-n)\kappa_t^*(n)h^*(n)\right)v_{n,1}^*$$
$$+ \kappa_r(N+1-n)z_2(N+1-n) + \lambda_r(N+1-n)z_2^*(n)$$

where $\kappa t(n)$, $\lambda t(n)$ and $\kappa r(n)$, $\lambda r(n)$ are complex coefficients that model the impact of image interference at the transmitter and receiver, respectively, on subcarrier n,
wherein h(n) represent the baseband equivalent fading gain in subcarrier n, whereas $z_i(n)$ (i=1,2) stands for the circularly symmetric white Gaussian noise AWGN that is added to the received signal on subcarrier n in the $i^{th}$ time slot.

8. Method according to claim 7, wherein the channels for the image subcarriers are configured to remain constant over the two consecutive time slots.

9. Method according to one of both claims 7 or 8, wherein if a pilot sequence has been transmitted, the received baseband signal is forwarded to the channel and image interference coefficients estimator, which is configured to estimate the distorted due to image interference channels' coefficients c1,n, c2,n, c1,N+1-n, c2,N+1-n, as

$$\begin{bmatrix} v_{n,2} & v_{N+1-n,2}^* \\ v_{n,1} & v_{N+1-n,1}^* \end{bmatrix}^{-1} \begin{bmatrix} r_1(n) \\ r_2(n) \end{bmatrix} = \begin{bmatrix} c_{1,n} \\ c_{2,n} \end{bmatrix} + \begin{bmatrix} \epsilon_{1,n} \\ \epsilon_{2,n} \end{bmatrix}$$

and

$$\begin{bmatrix} v_{N+1-n,2} & v_{n,2}^* \\ v_{N+1-n,1} & v_{n,1}^* \end{bmatrix}^{-1} \begin{bmatrix} r_1(N+1-n) \\ r_2(N+1-n) \end{bmatrix} = \begin{bmatrix} c_{3,n} \\ c_{4,n} \end{bmatrix} + \begin{bmatrix} \epsilon_{3,n} \\ \epsilon_{4,n} \end{bmatrix}.$$

wherein, the parameters $\varepsilon_i$ (i = 1,2,3,4) represent estimation errors, due to the additive noise;

wherein next, the parameters c1,n, c2,n, c1,N+1-n, c2,N+1-n are forwarded to the combiner.

10. Method according to one of the preceding claims, wherein if an information message has been transmitted, the two consecutive received baseband signals are forwarded to the combiner, which is configured to use and combine the received signals in the first and the second time slot on the subcarriers n and N+1-n, wherein T stands for the symbol duration;

wherein the combiner's output is forwarded to the constellation demapper, which is configured to estimate the transmitted symbols using a typical detector, such as a maximum likelihood detector MLD.

**Patentansprüche**

1. Verfahren mit geringer Komplexität zum Wandeln von Bildinterferenz, die in drahtlosen Mehrträgersystemen verursacht wird, in Diversitätsverstärkung, wobei das drahtlose Mehrträgersystem Folgendes umfasst:

Drucker zum Drucken eines 3D-Objekts basierend auf einem Computermodell, wobei der Drucker Folgendes umfasst:

- einen Mehrträger-Einzelantennensender;
- einen Mehrträger-Einzelantennenempfänger;
- wobei der Sender einen Codierer umfasst; und
- wobei der Empfänger einen Kombinierer umfasst, der konfiguriert ist, um die Symbole, die in Bilduntertägern in zwei aufeinanderfolgenden Zeitschlitzen empfangen werden, zu verarbeiten, wobei der Sender und der Empfänger die Bildinterferenz bewirken,

wobei das Verfahren **dadurch gekennzeichnet ist, dass** es die Schritte

- Codieren modulierter Symbole an dem Sender, und
- Kombinieren von Signalen, die an Bilduntertägern an dem Empfänger empfangen werden,

umfasst, wobei die Schritte in dieser Reihenfolge ausgeführt werden, wobei

i) Sendeinformationscodierung sowohl während Kanalschätzungs- als auch Datenübertragungsphasen durchgeführt wird;

ii) der Kombinierer, welcher in dem Empfänger aufgenommen ist, während der Datenübertragungsphase verwendet wird;

iii) ein herkömmlicher Maximum-Likelihood-Detektor MLD zur Symbolschätzung verwendet wird, während die Kombiniererausgabe ein IQI(gleichphasig und Quadraturungleichgewicht)-freies Signal ist, wodurch eine Verstärkungsdiversitätsreihenfolge von 2 bereitgestellt wird.

2. Verfahren nach dem vorherigen Anspruch 1, wobei ein Fehlerboden, welcher bei Vorhandensein der Bildinterferenz erzeugt wird, die auftritt, wenn der herkömmliche Empfänger verwendet wird, entfernt wird.

3. Verfahren nach einem der vorherigen Ansprüche 1 oder 2, wobei mit dem Sender, der in OFDM-Systemen verwendet werden kann, beabsichtige übertragene Datenbits zunächst in komplexe Symbole unter Verwendung eines Konstellations-Mappers abgebildet werden, wobei die Symbole dann codiert und über eine umgekehrte schnelle Fouriertransformations(IFFT)-einheit in die Zeitdomäne transformiert werden, wobei ferner ein Schutzintervall eingeführt wird, um die Entfernung der Zwischensymbolinterferenz an dem Empfänger zu ermöglichen, wobei schließlich das Signal von digital zu analog gewandelt wird, bevor es aufwärts gewandelt und übertragen wird, während die Mängel der Aufwärtswandlungseinheit Bildinterferenz bewirken.

4. Verfahren nach Anspruch 3, wobei mit dem Sender, der in OFDM-Systemen verwendet wird, die beabsichtigten übertragenen Datenbits zunächst in komplexe Symbole unter Verwendung eines Konstellations-Mappers durch Einsetzen eines Quadraturamplitudenmodulations(QAM)-schemas abgebildet werden, wobei die Symbole dann codiert und über eine umgekehrte schnelle Fouriertransformations(IFFT)-einheit in die Zeitdomäne transformiert werden.

5. Verfahren nach einem der vorherigen Ansprüche, wobei die Übertragung in zwei aufeinanderfolgenden Zeitschlitzen organisiert ist, wobei der Codierer konfiguriert ist, um als Eingabe die Symbole zu übernehmen, die über die N Unterträger in einem bestimmten Zeitschlitz hochgeladen werden sollen, und eine neu eingerichtete Transformation dieser Symbole zurückgibt.

6. Verfahren nach Anspruch 5, wobei die Eingabe des Codierers wie folgt ist:

$$\mathbf{u} = \begin{bmatrix} u_1 \\ u_2 \\ \vdots \\ u_{\frac{N}{2}} \\ u_{\frac{N}{2}+1} \\ \vdots \\ u_{N-1} \\ u_N \end{bmatrix}$$

wobei sich die Ausgabe des Codierers wie folgt ergibt:

$$\mathbf{v} = \begin{bmatrix} u_N & u_1^* \\ u_{N-1} & u_2^* \\ \vdots & \vdots \\ u_{\frac{N}{2}+1} & u_{\frac{N}{2}}^* \\ -u_{\frac{N}{2}}^* & u_{\frac{N}{2}+1} \\ \vdots & \vdots \\ -u_2^* & u_{N-1} \\ -u_1^* & u_N \end{bmatrix}$$

wobei $(\cdot)^*$ der komplexe konjugierte Operator ist, wobei die Elemente in der ersten und der zweiten Spalte der Reihe n der Matrix v die Symbole darstellen, die jeweils in dem aufeinanderfolgenden zweiten und ersten Zeitschlitz in den Unterträger n hochgeladen werden.

7. Verfahren nach einem der vorherigen Ansprüche, wobei der Empfänger in OFDM-Systemen verwendet wird, wobei das empfangene Signal zunächst abwärts gewandelt wird, während die Abwärtswandlungseinheit Bildinterferenz aufgrund von Hardwaremängeln bewirkt, wobei als nächstes das Schutzintervall entfernt wird und das Signal zu dem Mehrträgerdemodulator weitergeleitet wird, welcher in dem Fall von OFDM eine schnelle Fouriertransformations(FFT)-einheit ist, und die Schutzintervalle entfernt werden, wobei die empfangenen Basisband-äquivalenten Signale in dem ersten und dem zweiten Zeitschlitz auf dem Unterträger n mit n<N/2+1 wie folgt sind:

$$r_1(n) = \kappa_r(n)h(n)(\kappa_t(n)v_{n,2} + \lambda_t(n)v^*_{N+1-n,2}) + \kappa_r(n)z_1(n)$$
$$+ \lambda_r(n)h^*(N+1-n)(\kappa_t(N+1-n)v_{N+1-n,2} + \lambda_t(N+1-n)v^*_{n,2})^* + \lambda_r(n)z^*_1(N+1-n)$$
$$= (\kappa_r(n)\kappa_t(n)h(n) + \lambda_r(n)\lambda^*_t(N+1-n)h^*(N+1-n))v_{n,2}$$
$$+ (\kappa_r(n)\lambda_t(n)h(n) + \lambda_r(n)\kappa^*_t(N+1-n)h^*(N+1-n))v^*_{N+1-n,2}$$
$$+ \kappa_r(n)z_1(n) + \lambda_r(n)z^*_1(N+1-n)$$

und jeweils

$$r_2(n) = \kappa_r(n)h(n)(\kappa_t(n)v_{n,1} + \lambda_t(n)v^*_{N+1-n,1}) + \kappa_r(n)z_2(n)$$
$$+ \lambda_r(n)h^*(N+1-n)(\kappa_t(N+1-n)v_{N+1-n,1} + \lambda_t(N+1-n)v^*_{n,1})^* + \lambda_r(n)z^*_2(N+1-n)$$
$$= (\kappa_r(n)\kappa_t(n)h(n) + \lambda_r(n)\lambda^*_t(N+1-n)h^*(N+1-n))v_{n,1}$$
$$+ (\kappa_r(n)\lambda_t(n)h(n) + \lambda_r(n)\kappa^*_t(N+1-n)h^*(N+1-n))v^*_{N+1-n,1}$$
$$+ \kappa_r(n)z_2(n) + \lambda_r(n)z^*_2(N+1-n)$$

während die empfangenen Basisband-äquivalenten Signale in dem ersten und dem zweiten Zeitschlitz auf dem (N+1-n)-Bildunterträger wie folgt sind:

$$r_1(N+1-n) = \kappa_r(N+1-n)h(N+1-n)(\kappa_t(N+1-n)v_{N+1-n,2} + \lambda_t(N+1-n)v^*_{n,2}) + \kappa_r(N+1-n)z$$
$$+ \lambda_r(N+1-n)h^*(n)(\kappa_t(n)v_{n,2} + \lambda_t(n)v^*_{N+1-n,2})^* + \lambda_r(N+1-n)z^*_1(n)$$
$$= (\kappa_r(N+1-n)\kappa_t(N+1-n)h(N+1-n) + \lambda_r(N+1-n)\lambda^*_t(n)h^*(n))v_{N+1-n,2}$$
$$+ (\kappa_r(N+1-n)\lambda_t(N+1-n)h(N+1-n) + \lambda_r(N+1-n)\kappa^*_t(n)h^*(n))v^*_{n,2}$$
$$+ \kappa_r(N+1-n)z_1(N+1-n) + \lambda_r(N+1-n)z^*_1(n)$$

und

$$r_2(N+1-n) = \kappa_r(N+1-n)h(N+1-n)(\kappa_t(N+1-n)v_{N+1-n,1} + \lambda_t(N+1-n)v^*_{n,1}) + \kappa_r(N+1-n)z$$
$$+ \lambda_r(N+1-n)h^*(n)(\kappa_t(n)v_{n,1} + \lambda_t(n)v^*_{N+1-n,1})^* + \lambda_r(N+1-n)z^*_2(n)$$
$$= (\kappa_r(N+1-n)\kappa_t(N+1-n)h(N+1-n) + \lambda_r(N+1-n)\lambda^*_t(n)h^*(n))v_{N+1-n,1}$$
$$+ (\kappa_r(N+1-n)\lambda_t(N+1-n)h(N+1-n) + \lambda_r(N+1-n)\kappa^*_t(n)h^*(n))v^*_{n,1}$$
$$+ \kappa_r(N+1-n)z_2(N+1-n) + \lambda_r(N+1-n)z^*_2(n)$$

wobei $\kappa_t(n)$, $\lambda_t(n)$ und $\kappa_r(n)$, $\lambda_r(n)$ komplexe Koeffizienten sind, die jeweils die Auswirkung der Bildinterferenz an dem Sender und dem Empfänger auf dem Unterträger n modellieren, wobei h(n) die Basisband-äquivalente Fadingverstärkung in dem Unterträger n darstellt, während $z_i(n)$ (i=1,2) für das kreissymmetrische weiße gaußsche Rauschen AWGN steht, das dem empfangenen Signal auf dem Unterträger n in dem i-ten Zeitschlitz hinzugefügt wird.

8. Verfahren nach Anspruch 7, wobei die Kanäle für die Bildunterträger konfiguriert sind, um über die beiden aufeinanderfolgenden Zeitschlitze konstant zu bleiben.

9. Verfahren nach einem der Ansprüche 7 oder 8, wobei, wenn eine Pilotsequenz übertragen worden ist, das empfangene Basisbandsignal zu dem Kanal- und Bildinterferenzkoeffizientenschätzer weitergeleitet wird, welcher konfiguriert ist, um die Koeffizienten der aufgrund der Bildinterferenz verzerrten Kanäle, c1,n, c2,n, c1,N+1-n, c2,N+1-n, wie folgt zu schätzen:

$$\begin{bmatrix} v_{n,2} & v_{N+1-n,2}^* \\ v_{n,1} & v_{N+1-n,1}^* \end{bmatrix}^{-1} \begin{bmatrix} r_1(n) \\ r_2(n) \end{bmatrix} = \begin{bmatrix} c_{1,n} \\ c_{2,n} \end{bmatrix} + \begin{bmatrix} \varepsilon_{1,n} \\ \varepsilon_{2,n} \end{bmatrix}$$

und

$$\begin{bmatrix} v_{N+1-n,2} & v_{n,2}^* \\ v_{N+1-n,1} & v_{n,1}^* \end{bmatrix}^{-1} \begin{bmatrix} r_1(N+1-n) \\ r_2(N+1-n) \end{bmatrix} = \begin{bmatrix} c_{3,n} \\ c_{4,n} \end{bmatrix} + \begin{bmatrix} \varepsilon_{3,n} \\ \varepsilon_{4,n} \end{bmatrix}$$

wobei die Parameter $\varepsilon_i$ ($i$ =1,2,3,4) Schätzungsfehler aufgrund des additiven Rauschens darstellen;
wobei als Nächstes die Parameter c1,n, c2,n, c1,N+1-n, c2,N+1-n zu dem Kombinierer weitergeleitet werden.

10. Verfahren nach einem der vorherigen Ansprüche, wobei, wenn eine Informationsnachricht übertragen worden ist, die beiden aufeinanderfolgenden empfangenen Basisbandsignale zu dem Kombinieren weitergeleitet werden, welcher konfiguriert ist, um die empfangenen Signale in dem ersten und dem zweiten Zeitschlitz auf den Unterträgern n und N+1-n zu verwenden und kombinieren, wobei T für die Symboldauer steht;
wobei die Ausgabe des Kombinierers zu dem Konstellations-Demapper weitergeleitet wird, welcher konfiguriert ist, um die übertragenen Symbole unter Verwendung eines typischen Detektors, wie etwa eines Maximum-Likelihood-Detektors, MLD, zu schätzen.

## Revendications

1. Procédé de faible complexité pour convertir l'interférence d'image provoquée dans des systèmes multiporteurs sans fil en diversité de gain comprenant :

   - un émetteur mono-antenne multiporteuse ;
   - un récepteur mono-antenne multiporteuse ;
   - dans lequel l'émetteur comprend un codeur; et
   - dans lequel le récepteur comprend un combinateur configuré pour traiter les symboles reçus dans des sous-porteuses d'image dans deux tranches de temps consécutives dans lesquelles lesdits émetteur et récepteur provoquent ladite interférence d'image,
   le procédé étant **caractérisé en ce qu'**il comprend les étapes consistant à

   - encoder des symboles modulés au niveau de l'émetteur, et
   - à combiner des signaux reçus à hauteur des sous-porteuses d'image au niveau du récepteur, dans lequel lesdites étapes sont exécutées dans cet ordre,

   dans lequel en outre

   i) l'encodage d'information de transmission est effectué pendant les deux phases d'estimation et de transmission de données,
   ii) le combinateur qui est incorporé au niveau du récepteur est utilisé pendant la phase de transmission de données,
   iii) un détecteur de probabilité maximale MLD conventionnel est utilisé pour l'estimation de symboles, tandis que la sortie du combinateur est un signal sans IQI, en déséquilibre en quadrature et en phase offrant ainsi un ordre de diversité de gain de 2.

2. Procédé selon la revendication précédente 1, dans lequel un plancher d'erreur, qui est généré en présence de ladite interférence d'image se produisant lorsque le récepteur conventionnel est utilisé, est supprimé.

**3.** Procédé selon l'une des revendications précédentes 1 ou 2, dans lequel avec ledit émetteur utilisable dans des systèmes OFDM, des bits de données émis prévus sont d'abord cartographiés en symboles complexes à l'aide d'un mappeur de constellation, les symboles étant ensuite codés et transformés dans le domaine temporel par l'intermédiaire d'une unité de transformée de Fourier rapide inverse IFFT,

dans lequel en outre un intervalle de protection est inséré afin de permettre l'élimination de l'interférence intersymbole au niveau du récepteur, dans lequel finalement le signal est converti du numérique en analogique, avant d'être converti à la hausse et émis, tandis que les imperfections de l'unité de conversion ascendante provoquent de l'interférence d'image.

**4.** Procédé selon la revendication 3, dans lequel avec ledit émetteur qui est utilisé dans les systèmes OFDM, les bits de données émis prévus sont d'abord cartographiés en symboles complexes à l'aide d'un mappeur de constellation en utilisant un schéma de modulation d'amplitude en quadrature QAM, dans lequel les symboles sont ensuite codés et transformés dans le domaine temporel par l'intermédiaire d'une unité de transformée de Fourier rapide inverse IFFT.

**5.** Procédé selon l'une des revendications précédentes, dans lequel l'émission est organisée en deux tranches de temps consécutives, dans lequel le codeur est configuré pour prendre en entrée les symboles destinés à être téléchargés sur les N sous-porteuses dans une tranche de temps particulière, et renvoie une transformation réarrangée de ces symboles.

**6.** Procédé selon la revendication 5, dans lequel l'entrée de l'encodeur est la suivante :

$$
\mathbf{u} = \begin{bmatrix} u_1 \\ u_2 \\ \vdots \\ u_{\frac{N}{2}} \\ u_{\frac{N}{2}+1} \\ \vdots \\ u_{N-1} \\ u_N \end{bmatrix}
$$

produisant la sortie de l'encodeur comme

$$
\mathbf{v} = \begin{bmatrix} u_N & u_1^* \\ u_{N-1} & u_2^* \\ \vdots & \vdots \\ u_{\frac{N}{2}+1} & u_{\frac{N}{2}}^* \\ -u_{\frac{N}{2}}^* & u_{\frac{N}{2}+1} \\ \vdots & \vdots \\ -u_2^* & u_{N-1} \\ -u_1^* & u_N \end{bmatrix}
$$

dans lequel (.)* est l'opérateur conjugué complexe, dans lequel les éléments des première et seconde colonnes de la rangée n de la matrice v représentent les symboles qui seront téléchargés vers la sous-porteuse n aux seconde et première tranches de temps consécutives respectivement.

**7.** Procédé selon l'une des revendications précédentes, dans lequel le récepteur est utilisé dans des systèmes OFDM, dans lequel le signal reçu est d'abord converti à la baisse, tandis que l'unité de conversion descendante provoque de l'interférence d'image due à des imperfections matérielles,

dans lequel ensuite, l'intervalle de protection est supprimé, et le signal est transmis au démodulateur multiporteur, qui dans le cas d'OFDM est une unité de transformée de Fourier rapide FFT, et les intervalles de protection sont supprimés,

dans lequel les signaux équivalents en bande de base reçus dans les première et seconde tranches de temps sur la sous-porteuse n, avec n<N/2 +1, sont comme suit :

$$\begin{aligned} r_1(n) &= \kappa_r(n)h(n)\left(\kappa_t(n)v_{n,2} + \lambda_t(n)v^*_{N+1-n,2}\right) + \kappa_r(n)z_1(n) \\ &\quad + \lambda_r(n)h^*(N+1-n)\left(\kappa_t(N+1-n)v_{N+1-n,2} + \lambda_t(N+1-n)v^*_{n,2}\right)^* + \lambda_r(n)z^*_1(N+1-n) \\ &= \left(\kappa_r(n)\kappa_t(n)h(n) + \lambda_r(n)\lambda^*_t(N+1-n)h^*(N+1-n)\right)v_{n,2} \\ &\quad + \left(\kappa_r(n)\lambda_t(n)h(n) + \lambda_r(n)\kappa^*_t(N+1-n)h^*(N+1-n)\right)v^*_{N+1-n,2} \\ &\quad + \kappa_r(n)z_1(n) + \lambda_r(n)z^*_1(N+1-n) \end{aligned}$$

et respectivement

$$\begin{aligned} r_2(n) &= \kappa_r(n)h(n)\left(\kappa_t(n)v_{n,1} + \lambda_t(n)v^*_{N+1-n,1}\right) + \kappa_r(n)z_2(n) \\ &\quad + \lambda_r(n)h^*(N+1-n)\left(\kappa_t(N+1-n)v_{N+1-n,1} + \lambda_t(N+1-n)v^*_{n,1}\right)^* + \lambda_r(n)z^*_2(N+1-n) \\ &= \left(\kappa_r(n)\kappa_t(n)h(n) + \lambda_r(n)\lambda^*_t(N+1-n)h^*(N+1-n)\right)v_{n,1} \\ &\quad + \left(\kappa_r(n)\lambda_t(n)h(n) + \lambda_r(n)\kappa^*_t(N+1-n)h^*(N+1-n)\right)v^*_{N+1-n,1} \\ &\quad + \kappa_r(n)z_2(n) + \lambda_r(n)z^*_2(N+1-n) \end{aligned}$$

tandis que les signaux équivalents en bande de base reçus dans les première et seconde tranches de temps sur la sous-porteuse d'image (N+1-n) sont les suivants :

$$\begin{aligned} r_1(N+1-n) &= \kappa_r(N+1-n)h(N+1-n)\left(\kappa_t(N+1-n)v_{N+1-n,2} + \lambda_t(N+1-n)v^*_{n,2}\right) + \kappa_r(N+1-n)z_1 \\ &\quad + \lambda_r(N+1-n)h^*(n)\left(\kappa_t(n)v_{n,2} + \lambda_t(n)v^*_{N+1-n,2}\right)^* + \lambda_r(N+1-n)z^*_1(n) \\ &= \left(\kappa_r(N+1-n)\kappa_t(N+1-n)h(N+1-n) + \lambda_r(N+1-n)\lambda^*_t(n)h^*(n)\right)v_{N+1-n,2} \\ &\quad + \left(\kappa_r(N+1-n)\lambda_t(N+1-n)h(N+1-n) + \lambda_r(N+1-n)\kappa^*_t(n)h^*(n)\right)v^*_{n,2} \\ &\quad + \kappa_r(N+1-n)z_1(N+1-n) + \lambda_r(N+1-n)z^*_1(n) \end{aligned}$$

et

$$\begin{aligned} r_2(N+1-n) &= \kappa_r(N+1-n)h(N+1-n)\left(\kappa_t(N+1-n)v_{N+1-n,1} + \lambda_t(N+1-n)v^*_{n,1}\right) + \kappa_r(N+1-n)z_2 \\ &\quad + \lambda_r(N+1-n)h^*(n)\left(\kappa_t(n)v_{n,1} + \lambda_t(n)v^*_{N+1-n,1}\right)^* + \lambda_r(N+1-n)z^*_2(n) \\ &= \left(\kappa_r(N+1-n)\kappa_t(N+1-n)h(N+1-n) + \lambda_r(N+1-n)\lambda^*_t(n)h^*(n)\right)v_{N+1-n,1} \\ &\quad + \left(\kappa_r(N+1-n)\lambda_t(N+1-n)h(N+1-n) + \lambda_r(N+1-n)\kappa^*_t(n)h^*(n)\right)v^*_{n,1} \\ &\quad + \kappa_r(N+1-n)z_2(N+1-n) + \lambda_r(N+1-n)z^*_2(n) \end{aligned}$$

dans lesquels $\kappa t(n)$, $\lambda t(n)$ et $\kappa r(n)$, $\lambda r(n)$ sont des coefficients complexes qui modélisent l'impact de l'interférence d'image à l'émetteur et au récepteur, respectivement, sur la sous-porteuse n,

dans lesquels h(n) représente la perte de gain équivalent en bande de base dans la sous-porteuse n, tandis que $z_i(n)$ (i=1,2) représente le bruit gaussien blanc à symétrie circulaire AWGN qui est ajouté au signal reçu sur la sous-porteuse n dans la $i^{\text{ème}}$ tranche de temps.

8. Procédé selon la revendication 7, dans lequel les canaux pour les sous-porteuses d'images sont configurés pour rester constants sur les deux tranches de temps consécutives.

9. Procédé selon l'une des deux revendications 7 ou 8, dans lequel si une séquence pilote a été transmise, le signal en bande de base reçu est transmis à l'estimateur de coefficients d'interférence d'image et canal, qui est configuré pour estimer les coefficients de déformation de canaux due à l'interférence d'image, ci ,n, $c_{2,n}$, $_{,N+1-n}$, $c_{2,N+1-n}$, comme

$$\begin{bmatrix} v_{n,2} & v_{N+1-n,2}^* \\ v_{n,1} & v_{N+1-n,1}^* \end{bmatrix}^{-1} \begin{bmatrix} r_1(n) \\ r_2(n) \end{bmatrix} = \begin{bmatrix} c_{1,n} \\ c_{2,n} \end{bmatrix} + \begin{bmatrix} \epsilon_{1,n} \\ \epsilon_{2,n} \end{bmatrix}$$

et

$$\begin{bmatrix} v_{N+1-n,2} & v_{n,2}^* \\ v_{N+1-n,1} & v_{n,1}^* \end{bmatrix}^{-1} \begin{bmatrix} r_1(N+1-n) \\ r_2(N+1-n) \end{bmatrix} = \begin{bmatrix} c_{3,n} \\ c_{4,n} \end{bmatrix} + \begin{bmatrix} \epsilon_{3,n} \\ \epsilon_{4,n} \end{bmatrix}$$

dans lequel les paramètres $\varepsilon_i$ (i = 1,2,3,4) représentent des erreurs d'estimation, dues au bruit additionnel ;
dans lequel ensuite, les paramètres $c_{1,n}$, $c_{2,n}$, $c_{1,N+1-n}$, $c_{2,N+1-n}$ sont transmis au combinateur.

10. Procédé selon l'une des revendications précédentes, dans lequel si un message d'information a été émis, les deux signaux en bande de base reçus consécutivement sont transmis au combinateur, qui est configuré pour utiliser et combiner les signaux reçus dans la première et la seconde tranche de temps sur les sous-porteuses n et N+1-n, dans lequel T représente le symbole de durée;
dans lequel la sortie du combinateur est transmise au démappeur de constellation, qui est configuré pour estimer les symboles émis à l'aide d'un détecteur classique, tel qu'un détecteur de probabilité maximale MLD.

Figure 1

Figure 2

Figure 3

Figure 4

17

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7822399 B2

- WO 2014050382 A

**Non-patent literature cited in the description**

- **Y. JIN ; J. KWON ; Y. LEE ; J. AHN ; W. CHOI ; D. LEE.** Additional diversity gain in OFDM receivers under the influence of IQ imbalances. *Proc. IEEE Int. Conf. Common. (ICC),* June 2007, 5915-5920